Europäisches Patentamt

European Patent Office

Office européen des brevets

(19)

(11) Publication number: 0 366 299
A2

# (12) EUROPEAN PATENT APPLICATION

(21) Application number: 89310367.1

(22) Date of filing: 11.10.89

(51) Int. Cl.5: B29C 65/34 , F16L 47/02 ,
//(B29L9/00,23:22)

(30) Priority: 25.10.88 GB 8824929

(43) Date of publication of application:
02.05.90 Bulletin 90/18

(84) Designated Contracting States:
AT BE DE ES FR GB IT NL SE

(71) Applicant: THE WELDING INSTITUTE
Abington Hall
Abington Cambridge CB1 6AL(GB)

(72) Inventor: Jones, Stephen Bruce
2 Priams Way
Stapleford Cambridgge CB2 5DT(GB)
Inventor: Watson, Martin Norman
3 Sudley Grove
Hardwick Cambridgge CB3 7XS(GB)
Inventor: Taylor, Nicola Suzanne
89 York Street
Cambridge CB1 2DZ(GB)
Inventor: Needham, James Christopher
5 Blacklands Close
Saffron Walden Essex(GB)

(74) Representative: Skone James, Robert Edmund
et al
GILL JENNINGS & EVERY 53-64 Chancery
Lane
London WC2A 1HN(GB)

(54) Joining lined pipe.

(57) A method of joining pipes having liners (3) of thermoplastics material comprises causing the pipe wall (1) to overlap the liner (3) and inserting a spacer member (2) compatible with the liner in the area of overlap of the proposed join. Alternatively, the pipe wall (1) can be cut away such that the lining (3) forms the overlap and a spacer member (2) compatible with the pipe wall (1) inserted. The weld join of either the spacer member (2) to its material or the overlap material together is made followed by the other. The two separate actions leave the material not being joined at that moment substantially unaffected.

Fig. 1.

## JOINING LINED PIPE

This invention relates to the joining of lined pipe to form a continuous or extended pipeline, and in particular to the joining of pipes lined with plastics such as a thermoplastic material.

It is wellknown that basically the approach (to joining by welding a pipe comprising a lining and an outer casing) normally involves separate operations due to the incompatibility of mixing, alloying or otherwise combining the inner and outer materials. For example, carbon steel pipes with a stainless steel lining (for improved corrosion resistance) cannot easily be fusion joined end to end, such as by arc welding, without causing some alloying or dilution of the stainless steel by the carbon steel. Thus it is normal practice for the carbon steel to be cut back to expose the stainless steel lining which is first joined, for example by arc welding. Subsequently, a carbon steel segment is joined in, taking care not to penetrate into the stainless steel lining excessively. Alternatively the lining is welded on the inside and the casing on the outside, taking care not to penetrate too deeply so that alloying is limited or avoided altogether.

An extreme situation is presented by inner and outer materials of highly dissimilar physical properties, such as in melting point, density, hardness etc, as in the case of a metal pipe lined with a plastics material, particularly where the disparity in melting points exceeds 500° C. Such constructions have only recently been proposed and significant problems have been encountered when trying to join such plastics lined pipes due primarily to heat generated during welding affecting the integrity of the plastics liner. In the past therefore, unlined pipe sections have been joined and then the plastics liner inserted.

In accordance with the present invention, a method of joining pipes having a pipe wall to which is fixed a plastics liner comprises causing first ones of the pipe wall and the liner of each pipe to overlap the other at the junction between the pipes; providing a spacer member of a material compatible with that of the other, second ones of the pipe wall and the liner of each pipe; welding the first ones of the pipe walls and the liners; and separately welding the second ones of the pipe walls and the liners to the spacer member positioned therebetween, the arrangement being such that each welding step leaves the material welded during the other welding step substantially unaffected.

One method comprises causing the pipe wall to overlap the liner and inserting a spacer member compatible with the liner in the area of overlap of the proposed join. Alternatively, the pipe wall can be cut away such that the lining forms the overlap and a spacer member compatible with the pipe wall inserted. The weld join of either the spacer member to its material or the overlap material together is made followed by the other. The two separate actions leave the material not being joined at that moment substantially unaffected.

The liner will generally have a thickness of a similar order of magnitude to that of the pipe wall. Typical thicknesses are in the range 5-50mm.

This invention relates in particular to methods for joining lined metal pipes, for example carbon steel, lined with a plastics material of limited upper temperature (i.e. softening temperature or the temperature at which deterioration occurs), e.g. not exceeding 500° C. A particular example is described with respect to a carbon steel outer casing lined with a thermoplastic, e.g. polyethylene, as could be utilised for pipeline transmission of sour (i.e. containing corrosive agents such as $H_2S$) gases.

One method involves adding a band or belt of compatible plastics material to effect the internal joint between the linings of adjacent lengths of the composite pipe. As an example the band could be of compatible thermoplastic material joined by conventional electrofusion techniques to an existing thermoplastic lining or, alternatively, such an internal band could be heated and pressed outwardly by a radially expanding array of hot plates, mounted for example on an internal mandrel. Furthermore the band may support or carry thermal isolation means to permit the external joining by welding of the casing (pipe wall), for example arc welding of the steel pipe, with the band in situ. Such thermal isolation may comprise ceramic material to support the molten weld metal with further thermal isolation provided by materials, such as kaolin or aluminium coated fibrous material, to protect the thermoplastic from the relatively high temperatures of the fused and heat affected zones. In addition a high temperature fibre reinforced plastics composite may provide further thermal isolation between the ceramic and the thermoplastic.

An example of a method of joining pipes according to the present invention will now be described with reference to the accompanying drawings, in which:-

Figure 1 is a joining arrangement for arc welding first and plastic welding second;

Figure 2 is an arrangement with plastics material inserted for plastic welding first and arc welding second;

Figure 3 shows a complete joint with shaped coupling material;

Figure 3A shows a plastic insert which has been shaped;

Figure 3B is a detail of ceramic backing of the insert; and

Figure 4 shows an arrangement for electrofusion of the insert.

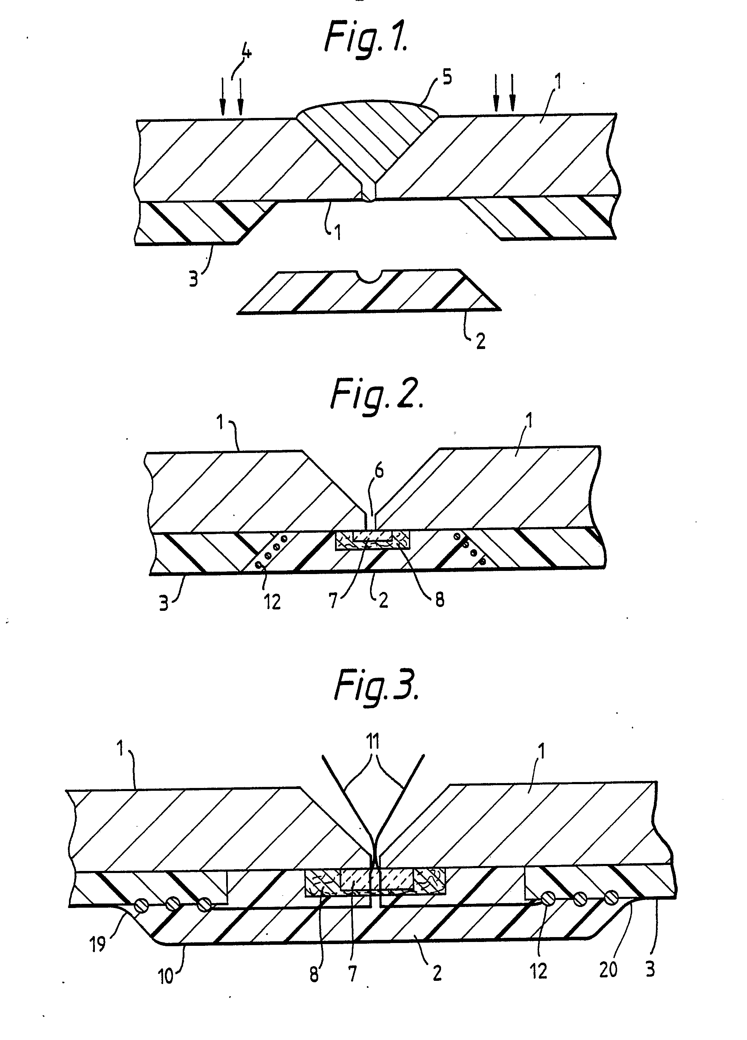

A simple arrangement is shown in Fig. 1, where the outer casing 1 is first welded without the band 2 in place and where the band 2 is subsequently added and joined to the plastics lining 3. Here the metal outer casing 1 may be chamfered to make a weld preparation and butted together with the internal plastic material 3 cut back on either side of the joint line.

Preferably the internal lining 3 should be cut back a sufficient distance such that the arc weld does not cause excessive heating of the plastics material and subsequent damage to its properties. The shape of the plastics band 2 is designed to slot into the cut away area and is preferably wedge shaped in its cross-section. If necessary water cooling 4 can be applied to the metal casing 1 a short distance away from the joint line 5 while welding is is progress, to limit the temperature rise of the parent material in that region to less than say 300°C. The chamfered sides of the plastics band 2 or insert corresponding to the prepared chamfer on the lining 3 can then be thermally joined by any conventional means, such as by local electrical heating (electrofusion) or by heat soak from an internal platten pressing radially outwards. In addition, the steel casing 1 may also be heated by hot mats or by gas flame to provide a preheat of the order of 200°C to assist the joining of the compatible plastics band 2 to the plastics lining 3.

Alternatively, as shown in Fig. 2, a band of a suitable shaped plastics material 2 is first inserted to provide continuity with the plastics lining 3 and at the same time to provide a groove or space for thermal isolating support to the metal joint region. In this arrangement the plastics band 2 is inserted (prior to welding the outer casing) and welded to the lining by conventional methods such as heating by resistance coils 8, 12 embedded in the band 2.

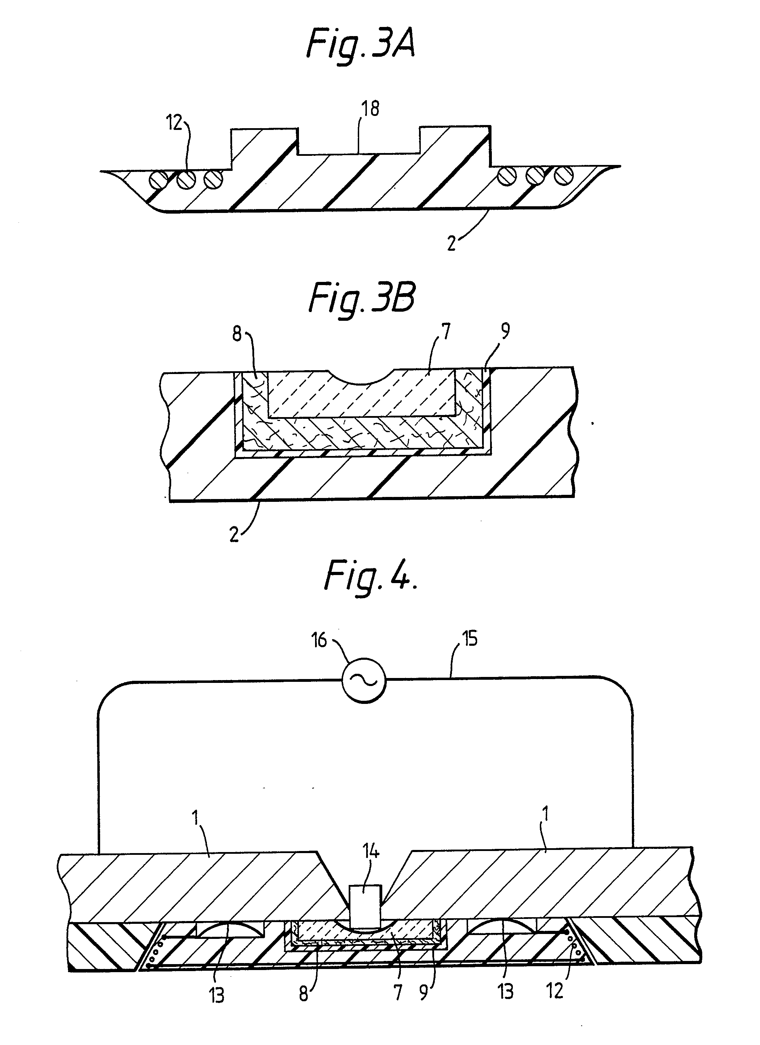

In the Figure 1 example it was not necessary for the band to contain thermal insulating material. However, where the compatible plastics band 2 is first welded to the plastics lining 3 (Figure 2), it is necessary for the band 2 to be able to contain suitable thermal protection from the subsequent arc weld. This protection may comprise a band of ceramic inserts or segments preferably rectangular in cross-section which inter alia will serve as a ceramic backing 7 to the arc weld, particularly the root pass at the position 6. Moreover, as the temperature rise of the ceramic 7 is not insignificant with respect to the plastics material 3, it is preferable to add further thermal isolation between the ceramic 7 and the plastics band 2. This may be any material 8 of low heat transfer coefficient such as provided by asbestos fibre, kaolin material, or a heat reflective layer such as an aluminium coated composite material shaped such that it separates the ceramic insert from the surface of the plastics band. In addition a fibre reinforced high temperature plastics material 9 (Figure 4) may provide thermal isolation for the plastics band 2.

Where the total thickness of the lining 3 is insufficient to allow adequate thermal protection and isolation from the weld zone, then the coupling material may be shaped as shown for example in Fig. 3. Instead of a wedge shaped cross-section flush with the existing lining the band has as much thickness of plastics material protruding as the thickness of the original liner. The embedded heating elements 12 are on the surface 17 which overlaps and contacts with the existing liner 3. The plastics band 2 is cut back 18 to allow the rectangular cross-section insulating materials 7, 8 to be placed over the surface adjacent to where the outer pipe 1 is joined. The turbulence associated with the extra bore protrusion 10 can be reduced by suitably shaping the leading and trailing edges 19, 20 of the inserted band.

For the electrofusion method of heating the plastic interfaces, the connecting wires 11 from the electrofusion power supply (not shown) to the embedded resistance heaters 12 can be taken through small holes in the ceramic insert 7, or in between the segments of the ceramic backing 7, and out through the joint of the outer casing 1 before the closing arc weld 5 is made. To avoid additional contamination, these connecting wires 11 may be of soft iron or nickel rather than copper, and furthermore may be cut off or detached prior to making the closing arc weld.

Yet another method of joining the plastics band 2 to the plastics lining 3 is explosive bonding where the faying surfaces are initially set at an angle and the explosive force applied to close the acute angle so formed, preferably such that a rippled or wave-like joint is obtained in the interfacial zone.

A typical ceramic backing is shown in Fig. 3B, which comprises a grooved ceramic segment 7 attached to a thermally insulating baffle 8 which in turn is supported by a fibre reinforced thermoplastic 9, such as APC 2 (carbon fibres in polyether ether ketone), in addition to the lining-compatible polyethylene base. Many standard backing materials can be utilised, such as flux reinforced backing FRB manufactured by Kobe Steel Co., Japan.

Yet a further arrangement for electrofusion joining of the band to the inner plastics lining is shown in Fig. 4. Here the electrical connections to the heating elements 12 are taken through sprung contacts, such as phosphor-bronze contact leaves 13, to the steel outer casing 1. The steel pipes are butted together with an insulating spacer 14 to provide a suitable root face gap for subsequent arc welding. Electrical connections 15 to the outer casings 1 from a power source 16, which are insulated from each other, then provide the requisite heating via the embedded heating coils to soften and join the thermoplastics lining material 3 and plastics band 2. The insulating spacer 14 is subsequently removed, the pipes being held in position inter alia by the joined-in plastics band 2, and the outer casings 1 arc welded together with the ceramic backing 7 acting both to support the fusion weld 5 and to protect the inner lining 3.

Various other mechanical arrangements can be adopted for tie-in type joints, and for inserting a longitudinal section into an existing plastics lined metal pipe line, based on the methods and systems already described. Furthermore in some cases the outer casing 1 could be stripped back to allow the plastics liners to be bonded first whereafter a metal band is welded in place between the casings.

Other methods of bonding the plastics insert may be utilised, as for example for smaller pipes, spin welding or vibration welding the plastics band and so forth.

## Claims

1. A method of joining pipes having a pipe wall to which is fixed a plastics liner (3), the method comprising causing first ones of the pipe wall (1) and the liner (3) of each pipe to overlap the other at the junction between the pipes; providing a spacer member (2) of a material compatible with that of the other, second ones of the pipe wall (1) and the liner (3) of each pipe; welding the first ones of the pipe walls (1) and the liners (3); and separately welding the second ones of the pipe walls (1) and the liners (3) to the spacer member (2) positioned therebetween, the arrangement being such that each welding step leaves the material welded during the other welding step substantially unaffected.

2. A method according to claim 1, wherein the liner is welded to the spacer member by energizing embedded heating elements.

3. A method according to any preceding claim wherein the spacer member carries thermal isolation means comprising one or more layers of ceramic material to prevent transfer of heat above the softening temperature of the spacer member.

4. A method according to any preceding claim, wherein the spacer member further comprises one or more layers of thermal insulating spacer to reduce transfer of heat during welding of the pipe wall.

5. A method according to any preceding claims, wherein one or more layers of fibre reinforced high temperature material are provided between the spacer member and the pipe wall weld surface.

6. A method according to any of the preceding claims, in which the power for welding the liner to the spacer member is obtained through the outer wall when the wall is of metal via sprung contacts to the heating coils.

7. A method according to claim 6, in which the outer metal walls of two pipes to be joined are insulated from one another by a removable insulator until the liner and spacer member are joined.

8. A method according to any preceding claim, in which the spacer member is shaped to have a wedge shaped cross-section and to lie flush with the existing liner.

9. A method according to any preceding claim, in which the spacer member has a recess in which are provided one or more layers of insulating material in alignment with the joint to be welded between the first ones of the walls and the liners.

10. A method according to any preceding claim, in which the spacer member protrudes above and overlaps the surfaces of the existing liners to be joined and is contoured at either end where it overlaps the liners.

*Fig.1.*

*Fig.2.*

*Fig.3.*

## Fig. 3A

12   18

2

## Fig. 3B

8   7   9

2

## Fig. 4.

16   15

1   1

14

13   8   7   9   13   12